# EUROPEAN PATENT APPLICATION

(11) **EP 2 799 981 A1**
(43) Date of publication of application: **05.11.2014**
(21) Application number: 13165774.4
(22) Date of filing: 29.04.2013
(51) Int. Cl.: G06F 9/44

(54) **Method for providing code, code generator and software development environment**

(71) Applicant: Siemens Aktiengesellschaft, 80333 München (DE)
(72) Inventor: Fige, Peter, 80687 München (DE); Riahi, Farid, 80331 München (DE)

(57) **Abstract**

The present invention provides a method for generating code in a predefined programming language based on a optimization problem, comprising the steps of reading a model of said optimization problem, identifying references to external data sources in the model, the data sources being external to said model, and generating the code, wherein said code comprises a program representation of said model and wherein said code comprises read and/or write accesses to said external data sources. The present invention furthermore provides a corresponding code generator and a software development environment.

## Description

### TECHNICAL FIELD

The invention relates to a method for providing code in a predefined programming language based on a optimization problem. The invention further relates to a code generator and a software development environment.

### BACKGROUND

Although applicable to any system that is used to develop software components, the present invention will be described in combination with software development environments.

In modern electronic applications, for example industrial applications like production line controllers, complex software programs are used to control said electronic applications.

In some applications the application controller is not programmed with a static control algorithm, but with a complex dynamic control program. Such complex dynamic control programs can include a optimization problem which is continuously solved in real time by the application controller using a solver integration which connects the application controller to a solver library for solving such optimization problems.

The development of such control software is a very time consuming task.

Usually a optimization problem is modelled with the underlying optimization application in mind. A software engineer then uses the model of the optimization problem as a basis for his implementation of the solver integration.

The software developer manually codes the solver integration, which is used to integrate the optimization problem into the control program and couple the control program with a predefined solver library. When manually coding the solver integration the software developer codes said solver integration in a predefined programming language, like e.g. C++, C#, Java or the like , and for a specific solver library, like e.g. CPLEX, Gurobi, SCIP/Soplex, GLPK or the like.

In complex applications the solver integration can easily comprise thousands of lines of code. Especially in such complex applications, the manual coding is a time consuming, and error prone process and the quality of the resulting code depends on the quality of the respective software engineer.

Furthermore, the solver integration should realize the optimization problem in its entirety and the realization of the optimization problem should be verifiable. With a conventional development process which includes manual coding of thousands of lines of solver integration code this is not possible.

In modern development processes it is furthermore necessary to adapt the model of the optimization problem to evolving application needs. Therefore, the solver integration also needs to be adapted to the changing model with every model iteration. If this adaptation is not concluded with high accurateness the model and the solver integration will drift apart from each other.

Because every solver library provides a proprietary solver interface the software developer needs to specifically program the solver integration for one solver library which is used in the respective project.

If for any reason in such an application one solver library is exchanged for another solver library the solver integration has to be rewritten from scratch.

Accordingly, there is a need for better integration of optimization problems into the software development process.

### SUMMARY

The present invention provides in a first aspect a method for providing code in a predefined programming language based on a optimization problem, comprising the steps of reading a model of said optimization problem, identifying references to external data sources in the model, the data sources being external to said model, and generating the code, wherein said code comprises a program representation of said model and wherein said code comprises read and/or write accesses to said external data sources.

In a second aspect the present invention provides a code generator for generating code for a optimization problem, comprising a model input interface configured to read a model of said optimization problem, a reference identification unit configured to identify references to external data sources in the model, the data sources being external to said model, and a code generation unit configured to generate the code, wherein said code comprises a program representation of said model in a predefined programming language and wherein said code comprises read and/or write accesses to said external data sources.

In a third aspect the present invention provides a software development environment comprising a code generator for generating code for a optimization problem, the code generator comprising a model input interface configured to read a model of said optimization problem, a reference identification unit configured to identify references to external data sources in the model, the data sources being external to said model, and a code generation unit configured to generate the code, wherein said code comprises a program representation of said model in a predefined programming language and wherein said code comprises read and/or write accesses to said external data sources.

The present invention is based on the conclusion that manual coding of a solver integration with thousands of lines of code is a complex, time consuming and error prone task which makes it difficult to fully integrate optimization problems into software projects.

Therefore, the present invention uses this knowledge to provide a model driven approach of integrating optimization problems into software projects.

Accordingly, the present invention provides a method for integrating models of optimization problems into software projects, wherein the software projects are written in a predefined programming language like C++, C#, Java or the like.

To integrate the models into the software projects the present invention generates code in the programming language of the respective software project from a model of a respective optimization problem, which code can then be integrated into existing or new software projects.

In order to integrate the code generated from the models with the respective software project the present invention allows the model to include references to data sources of the respective software project, which can be accessed by the logic defined by the models.

The references to the data sources, which are defined in the model, are then included in the generated code as read/or write accesses to the data sources.

Consequently, the present invention allows software developers to provide model based descriptions of optimization problems, from which executable code can be generated, which then can be executed e.g. in a control system and access all data sources of the respective control system e.g. in real time.

Therefore, the present invention provides software developers with a very easy to manage tool for developing optimization problems which can then be transferred to real world control systems.

The present invention, furthermore, allows efficient code generation based on the respective models without the risking the introduction of coding errors by a software engineer.

The present invention also makes sure that the generated code exactly represents the model of the optimization problem. Any changes to the model can instantly be translated into code by re-executing the method according to the present invention.

Finally, the present invention allows easily adapting the generated code to different application requirements. For example the program language of the code can be changed by simply re-executing the method according to the present invention with a new target programming language.

Further embodiments of the present invention are subject of the further subclaims and of the following description, referring to the drawings.

In a possible embodiment the model comprises a mixed integer linear program. This allows describing the optimization problem in a standardized and human readable format.

In a possible embodiment the mixed integer linear program is provided in a domain specific language for formulating mixed integer linear programs, especially AMPL and/or OPL and/or an AMPL or OPL based dialect. Using well known domain specific languages makes it possible to use well known development tools and reduces training needs for new developers.

In a possible embodiment the code is generated to comprise a program code which when compiled and executed solves the optimization problem using a predetermined solver library for solving optimization problems for solving the optimization problem described by the model. Using existing solver libraries reduces the effort of code generation because the solver logic is already implemented by the solver libraries and does not need to be generated for every project.

In an embodiment the solver library is a solver library like e.g. CPLEX, Gurobi, SCIP/Soplex, GLPK or the like.

In a possible embodiment the step of identifying references to external data sources comprises the steps of:
identifying the external data sources; and
identifying the respective locations of said external data sources.

Identifying external data sources and their respective locations in a model allows using different external data source having different locations as sources of information for the optimization problem.

The locations of the data sources can be locations of objects and their methods, which may be defined in classes of the current source code or be provided externally by corresponding libraries, e.g. dynamic linked libraries (DLLs) or the like. This e.g. allows referencing a function in a dll which will provide real time data of the respective control system for which the software is developed.

In a possible embodiment generating the code comprises the steps of:
analysing said model based on a corresponding grammar for the model;
building an abstract syntax tree representation of the model; and
generating the code in the predefined programming language based on the abstract syntax tree.

An abstract syntax tree provides an intermediate representation of the respective model and allows flexible generation of code in different programming languages.

In a possible embodiment the step of generating the code comprises the step of binding the code to the external data sources by including references to the respective locations of the external data sources in the code.

In a possible embodiment including references comprises including references to data sources defined by or in a software development environment in which the method is executed. In the software development environment usually the software for e.g. a control system is developed. If the references comprise references to the data sources of this software the generated code can be integrated into the software for e.g. the control system with little effort.

In a possible embodiment generating the code comprises automatically generating documentation for the code or the model. Providing documentation together with the code allows software engineers to revise the generated code with little effort.

In a possible embodiment the code is generated when the model is changed. This allows maintaining consistency between the model and the generated code.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a flow diagram of an embodiment of a method according to the first aspect of the present invention;
- Fig. 2: shows a block diagram of an embodiment of a code generator according to the second aspect of the present invention;
- Fig. 3: shows a block diagram of an embodiment of a software development environment according to the third aspect of the present invention;
- Fig. 4: shows a flow diagram of another embodiment of a method according to the first aspect of the present invention;
- Fig. 5: shows a block diagram of another embodiment of a code generator according to the second aspect of the present invention;
- Fig. 6: shows a screenshot of another embodiment of a software development environment according to the third aspect of the present invention;
- Fig. 7: shows a block diagram of one embodiment of the code generation process according to the present invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily drawn to scale relative to each other. Like reference numerals designate corresponding similar parts.

### DETAILED DESCRIPTION OF THE DRAWINGS

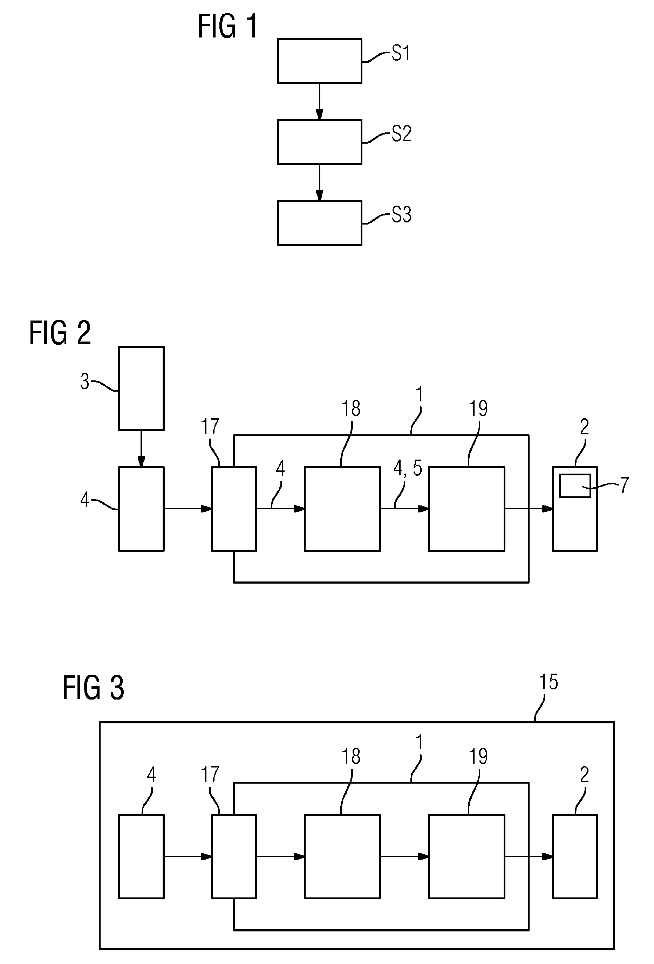

Fig. 1 shows a flow diagram of an embodiment of a method according to the first aspect of the present invention.

With the method according to the present invention code 2 is generated in a predefined programming language based on a optimization problem 3.

In a first step S1 of the method a model 4 of the optimization problem 3 is read.

In a second step S2 references to external data sources 6 in the model 4 are identified, wherein the data sources 6 are external to the model 4 of the optimization problem 3.

In a third step S3 of the method the code 2 is generated, wherein the code 2 is generated to comprise a program representation 7 of said model 4. The code furthermore comprises read and/or write accesses to the external data sources 6.

In an embodiment the data sources 6 can be variables 6 in a program in which the generated code 2 is then integrated. The data sources 6 can also be function names 6 in corresponding libraries , e.g. dynamic linked libraries (DLLs), or the like.

In an embodiment the code 2 is generated in the same programming language as the program that contains the variables 6.

In another embodiment the code 2 can be generated in any programming language like e.g. C#, C++, Java or the like.

Reading the model 4 can be performed by reading the model 4 from a file on a hard disk. In another embodiment the model 4 can be read from a central model repository, e.g. a network server, a database server or the like.

In another embodiment the model is provided together with the data sources in a software development environment. Fig. 2 shows a block diagram of an embodiment of a code generator 1 according to the second aspect of the present invention.

The code generator 1 comprises a model input interface 17 which is coupled to a reference identification unit 18. The reference identification unit 18 is coupled to a code generation unit 19.

The input interface 17 is configured to read a model 4, which represents a optimization problem 3, and provide said model 4 to the reference identification unit 18.

The reference identification unit 18 is configured to identify references 5 to external data sources in the model 4, the data sources being external to said model 4. The reference identification unit 18 then provides the model 4 and the identified references 5 to the code generation unit 19.

Finally, the code generation unit 19 is configured to generate the code 2. The generated code 2 comprises a program representation 7 of said model 4 in a predefined programming language. Furthermore, the generated code 2 comprises read and/or write accesses to said external data sources.

Fig. 3 shows a block diagram of an embodiment of a software development environment 15 according to the third aspect of the present invention.

The software development environment 15 comprises a code generator 1 according to Fig. 2.

In an embodiment the software development environment 15 is a software development environment 15 which is provided for developing software projects.

In an embodiment the code generator 1 is included in the software development environment 15 as a plugin, which extends the functionality of the software development environment 15. In another embodiment the code generator 1 is provided as integral part of the software development environment 15.

If the code generator 1 is included in the software development environment 15 as a plugin the code generator 1 can be used with a plurality of different software development environments 15.

In an embodiment the code generator 1 is configured to generate code 2 which accesses variables, which are defined in a software project in the software development environment 15, for reading and writing.

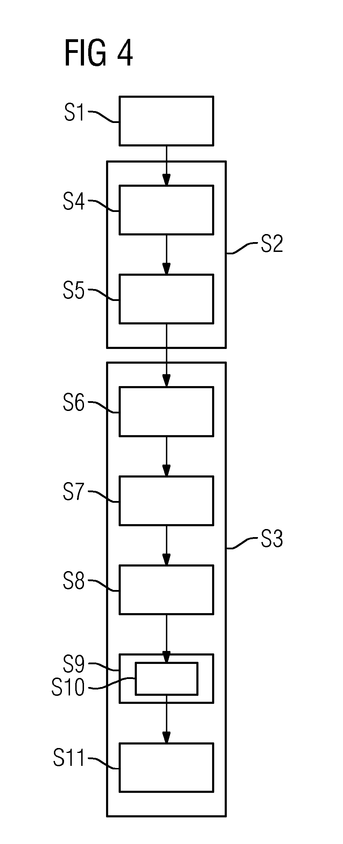

Fig. 4 shows a flow diagram of another embodiment of a method according to the first aspect of the present invention.

The method of Fig. 4 is based on the method of Fig. 1, wherein the second step S2 of identifying references 5 to external data sources 6 in the model 4 comprises identifying the external data sources 6, and identifying the respective locations 10 of said external data sources 6.

In an embodiment code 2 is generated to comprise a program code which when compiled and executed solves the optimization problem 3 using a predetermined solver library 9 for solving optimization problems for solving the optimization problem 3 described by the model 4.

The solver library can be a solver library like e.g. CPLEX, Gurobi, SCIP/Soplex, GLPK or the like.

Furthermore, the step S3 of generating the code 2 comprises the step S6 of analysing said model 4 based on a corresponding grammar 11 for the model 4.

The grammar 11 is a description of the structure and all elements of the model 4, which allows analysing the model and its function.

The step S3 of generating the code 2 furthermore comprises the step S7 of building an abstract syntax tree 12 representation of the model 4. The abstract syntax tree 12 is built analysing the model 4 using the grammar 11.

An abstract syntax tree 12, or just syntax tree 12, is a tree representation of the syntactic structure of the model 4. In the abstract syntax tree 12 each node denotes a construct occurring in the model 4.

The abstract syntax tree 12 does not represent every detail appearing in the model. Grouping parentheses for example are implicit in the tree structure. Furthermore a construct like an if-condition-then expression may be represented by a single node with two branches.

The step S3 of generating the code 2 furthermore comprises the step S8 of generating the code 2 in the predefined programming language based on the abstract syntax tree 12.

Furthermore, the step S3 of generating the code 2 comprises the step S9 of binding the code 2 to the external data sources 6 by including references 13 to the respective locations 10 of the external data sources 6 in the code 2.

The step S9 of including references 13 comprises the step S10 of including references 13 to data sources 6 defined by or in the software development environment 15.

Finally the step S3 of generating the code 2 furthermore comprises the steps S11 of automatically generating documentation 16 for the code 2 and/or the model 4.

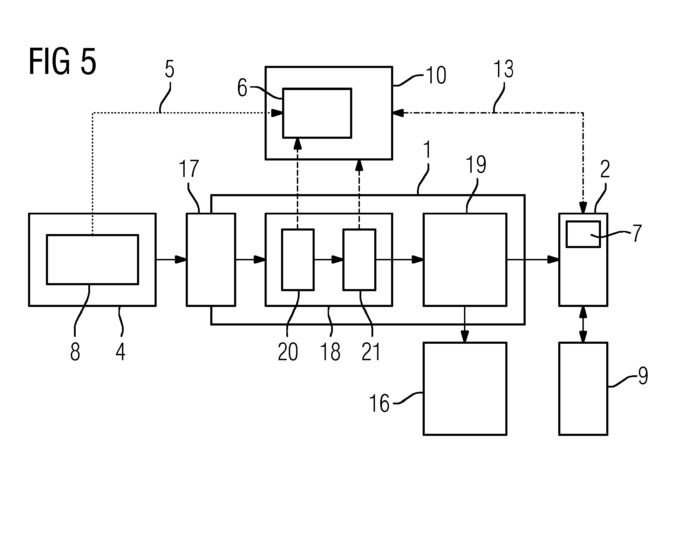

Fig. 5 shows a block diagram of an embodiment of a code generator 1 according to the second aspect of the present invention.

The code generator 1 in Fig. 5 is based on the code generator 1 of Fig. 2.

In Fig. 5 the model 4 comprises a mixed integer linear program 8. In another embodiment the model 4 comprises a linear program. The mixed integer linear program 8 in Fig. 5 comprises references 5 to data sources 6 which are referenced by the logic which is described in them model 4.

The reference identification unit 18 of Fig. 4 furthermore comprises a model analyser 20 and a reference resolver 21.

The model analyser 20 is configured to identify the external data sources 6 which are referenced in the model 4, and the reference resolver 21 is configured to identify the respective locations 10 of said external data sources 6 which are referenced in the model 4.

The code generation unit 1 of Fig. 5 is configured to analyse said model 4 based on a corresponding grammar for the model 4, build an abstract syntax tree of the model 4, and generate the code 2 in the predefined programming language based on the abstract syntax tree.

The code generation unit 19 is further configured to bind program representation 7 of the model 4 to the external data sources 6 by including references 13 to the respective locations 10 of the external data sources 6 in the code 2.

The references 13 to external data sources 6 can be embodied as references to data sources 6 defined by or in a software development environment in which the code generator 1 is executed.

The code generation unit 19 is further configured to automatically generate documentation 16 for the code 2 or the model 4.

Furthermore, the code generation unit 19 is configured to generate code 2 which comprises a program representation 7 of the model 4 which when compiled and executed solves the optimization problem 3 using a predetermined solver library 9 for solving optimization problems for solving the optimization problem 3 described by the model 4.

Finally, the code generation unit 19 is configured to generate code 2 every time the model 4 is changed.

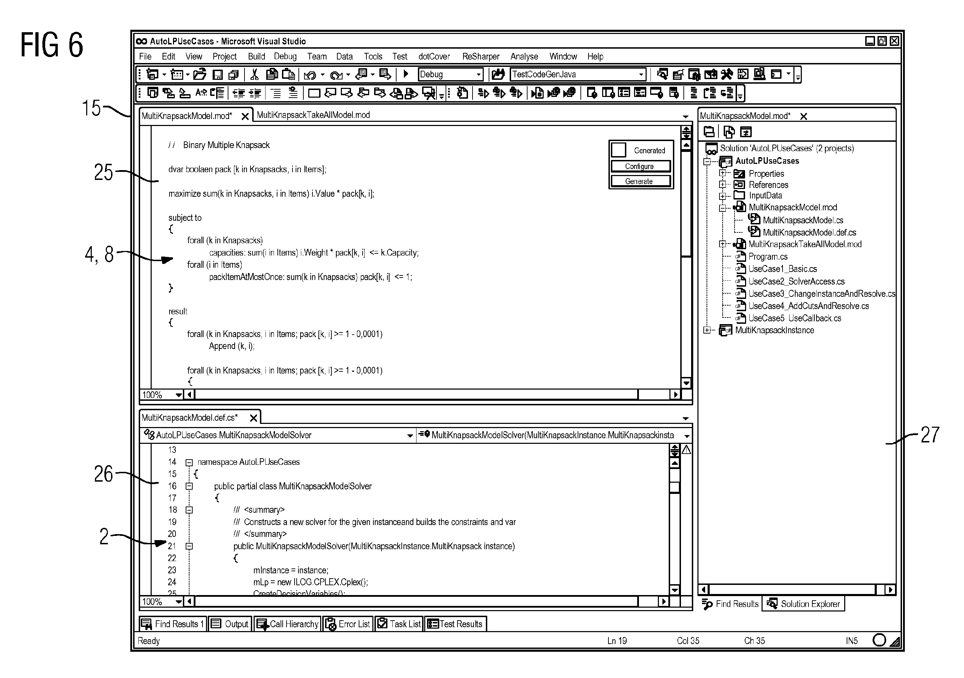

Fig. 6 shows a screenshot of an embodiment of a software development environment 15 according to the third aspect of the present invention.

The software development environment 15 comprises three main sections 25 - 27. A first section 25 is situated in the upper half and stretches from the left to about 2/3s of the window of the software development environment 15. The second section 26 is situated below the first section 25 and a third section 27 stretches from the top to the bottom on the right 1/3 of the window of the software development environment 15.

In the first section 25 a model 4 is shown as a mixed integer linear program 8 which is written in a domain specific language for describing mixed integer linear programs 8. In one embodiment this language is AMPL, OPL, an AMPL or OPL based dialect or any other domain specific language.

In Fig. 6 the model 4 in the first section 25 describes a binary multi-knapsack problem, which is a well-known problem in combinatorial optimization. In Fig. 6 only the first part of the mixed integer linear program 8 of the model 4 can be seen. In total the binary multiply knapsack problem is described in 23 lines of code.

In the second section 26 the generated code 2 is displayed, which was generated by the present invention from the model 4 in the programming language C#. The generated code 2 comprises a solver integration which uses a solver library to solve the binary multiply knapsack problem which is described by the model 4.

The generated code 2 comprises 274 lines of code and has a drastically reduced readability compared to the original model 4 in the first section.

In the third section 27 of the screenshot of the software development environment 15 all elements which the software development environment 15 needs to manage a software project are listed in a tree view. In the tree view the software development environment 15 also lists "References" and "InputData", which in one embodiment can be referenced by the generated code 2.

In Fig. 6 it becomes clear, how the present invention reduces the work load on software engineers, which only need to deal with the model 4 or the mixes integer linear program 8, which only comprises 23 lines of code instead of directly programming the C# solver integration, which comprises 274 lines of code.

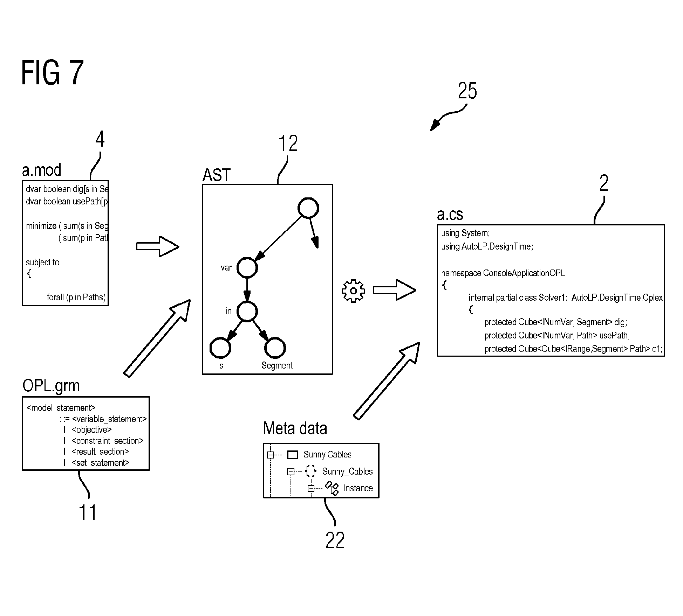

Fig. 7 shows a block diagram of one embodiment of the code generation process 25 according to the present invention.

The code generation process 25 comprises reading a model 4, which in Fig. 7 is embodied as a file called "a.mod", and a grammar 11, which in Fig. 7 is embodied as a file called "OPL.grm". The grammar 11 describes the grammar of the OPL programming language, which is a domain specific programming language for describing optimization problems.

From the model 4 and the grammar 11 an abstract syntax tree 12 is generated, which represents the model 4 in an abstract and language independent way.

From the abstract syntax tree 12 and project specific meta data 22 the code 2 is generated.

In an embodiment the meta-data comprises the definition of all types, which objects are referred to in the model. E.g. in c# this meta-data is typically given by .NET-assemblies (managed DLLs). In c++ it is provided by so called header files (".h" files).

In one embodiment the method according to the present invention is used to optimize the production process in a factory which produces light emitting diodes.

The optimization problem comprises the complete production process starting from the optimization of waver warehouse stock, waver assignment to product lines, product line balancing to Customer assignment of lot numbers, etc.

A model 4 is then built according to the optimization problem and references to the factory data sources, like a warehouse data system and production line control systems are established.

From the model 4 the code generator 1 according to the present invention generates code 2, which comprises a solver integration and solves the underlying optimization problem.

When the factory control system is loaded with the control software, which includes the generated code 2, the factory control is always optimized according to the optimization problem 3.

In a factory the use of a control software which includes code 2 which comprises a solver integration according to the present invention, allows reducing production costs, reducing defects in production, speeding up customer order processing and the like.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

## Claims

1. A method for providing code in a predefined programming language based on a optimization problem, comprising the steps of:
reading a model of said optimization problem;
identifying references to external data sources in the model,
the data sources being external to said model;
generating the code, wherein said code comprises a program representation of said model and wherein said code comprises read and/or write accesses to said external data sources.

2. The method of claim 1, wherein the model comprises a mixed integer linear program.

3. The method of claim 2, wherein the mixed integer linear program is provided in a domain specific language for formulating mixed integer linear programs, especially AMPL and/or OPL and/or an AMPL or OPL based dialect.

4. The method of claim 1, wherein the code is generated to comprise a program code which when compiled and executed solves the optimization problem using a predetermined solver library for solving optimization problems for solving the optimization problem described by the model.

5. The method of claim 1, wherein the step of identifying references to external data sources comprises the steps of:
identifying the external data sources; and
identifying the respective locations of said external data sources.

6. The method of claim 5, wherein generating the code comprises the steps of:
analysing said model based on a corresponding grammar for the model;
building an abstract syntax tree representation of the model;
and
generating the code in the predefined programming language based on the abstract syntax tree.

7. The method of claim 6, wherein the step of generating the code comprises the step of binding the code to the external data sources by including references to the respective locations of the external data sources in the code.

8. The method of claim 7, wherein including references comprises including references to objects defined by or in a software development environment in which the method is executed.

9. The method of claim 1, wherein generating the code comprises automatically generating documentation for the code or the model.

10. The method of claim 1, wherein the code is generated when the model is changed.

11. A code generator for generating code for a optimization problem, comprising
a model input interface configured to read a model of said optimization problem;
a reference identification unit configured to identify references to external data sources in the model, the data sources being external to said model;
a code generation unit configured to generate the code, wherein said code comprises a program representation of said model in a predefined programming language and wherein said code comprises read and/or write accesses to said external data sources.

12. The code generator of claim 11, wherein the model comprises a mixed integer linear program.

13. The code generator of claim 12, wherein the mixed integer linear program is provided in a domain specific language for formulating mixed integer linear programs, especially AMPL and/or OPL and/or an AMPL or OPL based dialect.

14. The code generator of claim 11, wherein the code generation unit is configured to generate code which comprises a program code which when compiled and executed solves the optimization problem using a predetermined solver library for solving optimization problems for solving the optimization problem described by the model.

15. The code generator of claim 11, wherein the reference identification unit comprises:
a model analyser which is configured to identify the external data sources; and
a reference resolver which is configured to identify the respective locations of said external data sources.

16. The code generator of claim 15, wherein the code generation unit is configured to:
analyse said model based on a corresponding grammar for the model;
build an abstract syntax tree representation of the model;
and
generate the code in the predefined programming language based on the abstract syntax tree.

17. The code generator of claim 16, wherein the code generation unit is configured to bind the code to the external data sources by including references to the respective locations of the external data sources in the code.

18. The code generator of claim 17, wherein the code generator is configured to include references to external data sources defined by or in a software development environment in which the code generator is executed.

19. The code generator of claim 11, wherein the code generation unit is configured to automatically generate documentation for the code or the model.

20. The code generator of claim 11, wherein the code generation unit is configured to generate code when the model is changed.

21. A software development environment comprising a code generator for generating code for a optimization problem, the code generator comprising:
a model input interface configured to read a model of said optimization problem;
a reference identification unit configured to identify references to external data sources in the model, the data sources being external to said model;
a code generation unit configured to generate the code,
wherein said code comprises a program representation of said model in a predefined programming language and wherein said code comprises read and/or write accesses to said external data sources.
